# EUROPÄISCHE PATENTSCHRIFT

(11) **EP 0 958 579 B1**
(45) Veröffentlichungstag und Bekanntmachung des Hinweises auf die Patenterteilung: **16.04.2003**
(21) Anmeldenummer: 98907996.7
(22) Anmeldetag: 27.01.1998
(51) Int. Cl.: G21C 19/317

(54) **VORRICHTUNG ZUR REKOMBINATION VON WASSERSTOFF IN EINEM GASGEMISCH**
DEVICE FOR RECOMBINING HYDROGEN IN A GAS MIXTURE
DISPOSITIF DE RECOMBINAISON D'HYDROGENE DANS UN MELANGE GAZEUX

(30) Priorität: 07.02.1997 DE 19704608
(43) Veröffentlichungstag der Anmeldung: 24.11.1999
(73) Patentinhaber: Framatome ANP GmbH, 91050 Erlangen (DE)
(72) Erfinder: ECKARDT, Bernd, D-63486 Bruchköbel (DE); HILL, Axel, D-64589 Stockstadt (DE)
(74) Vertreter: Tergau & Pohl Patentanwälte
(86) Internationale Anmeldenummer: EP9800430
(87) Internationale Veröffentlichungsnummer: WO98035356

(56) Entgegenhaltungen:
- DE-C- 4 428 956
- US-A- 4 228 132
- US-A- 4 911 879
- US-A- 5 230 859
- US-A- 5 301 217
- US-A- 5 321 730

## Beschreibung

Die Erfindung bezieht sich auf eine Vorrichtung zur Rekombination von Wasserstoff in einem Gasgemisch, insbesondere für ein Kernkraftwerk.

In einem Kernkraftwerk könnte bei Stör- oder Unfallsituationen, so unwahrscheinlich diese auch sein mögen, beispielsweise aufgrund von Kernaufheizung eine Oxidation von Zirkonium auftreten. In diesem Fall muß mit der Bildung und Freisetzung von Wasserstoffgas und Kohlenmonoxid innerhalb des den Reaktorkern umschließenden Sicherheitsbehalters oder Containments gerechnet werden. Dadurch können innerhalb des Containments explosive Gasgemische entstehen.

Zur Verhinderung der Bildung derartiger explosiver Gasgemische im Containment eines Kernkraftwerks werden verschiedene Einrichtung oder Verfahren diskutiert. Hierzu gehören beispielsweise Einrichtungen wie katalytische Rekombinatoren, katalytisch und elektrisch betriebene Zündeinrichtungen oder die Kombination der beiden vorgenannten Einrichtungen sowie Verfahren einer permanenten oder nachträglichen Inertisierung des Containments.

Beim Einsatz eines katalytischen Rekombinators zur Beseitigung des Wasserstoffs aus der Atmosphäre des Containments soll insbesondere eine frühzeitige und flammenlose Rekombination des Wasserstoffs mit Sauerstoff erreicht werden. Dabei soll ein signifikanter Druckaufbau als Folge einer virulenten Wasserstoffverbrennung sicher vermieden sein. Eine dazu geeignete früh startende Rekombinationseinrichtung, die auch bei längerer Standzeit in der Containment-Atmosphäre nicht wesentlich an Aktivität verliert und bei niedrigen Umgebungstemperaturen passiv startet, wird in der (nicht vorveröffentlichten) Deutschen Patentanmeldung 196 36 557.0 vorgeschlagen. Mit einer derartigen Rekombinationseinrichtung ist eine "sanfte" Rekombination des Wasserstoffs in einer z.B. dampfinertisierten Phase der Containment-Atmosphäre ohne eine Zündung möglich. Ein Katalysatorsystem zur Rekombination von Wasserstoff mit Sauerstoff ist auch aus der US-PS 5,167,908 bekannt.

Aus der EP 0 436 942 A1 ist ein Rekombinatorsystem mit einer Gehäuseschutzeinrichtung bekannt, die sich in Abhängigkeit von einer äußeren Temperatur selbsttätig öffnet. In einem Bereitschaftszustand des Rekombinationssystems ist die Gehäuseschutzeinrichtung hingegen geschlossen, so daß eine Verschmutzung der katalytisch aktiven Oberfläche des Rekombinators vermieden ist.

Bei einer aus der EP 0 416 140 A1 bekannten Rekombinatoreinrichtung hingegen sind Filtermedien vorgesehen, die Schadstoffe aus der Umgebungsatmosphäre, wie beispielsweise Aerosole, zurückhalten und somit den Katalysator der Rekombinatoreinrichtung gegen Verunreinigung schützen.

Aus der EP 0 388 955 A1 ist eine Rekombinatoreinrichtung bekannt, bei der zusätzlich eine Zündvorrichtung zur Auslösung einer kontrollierten Wasserstoffverbrennung vorgesehen ist.

Jedes bekannte Rekombinatorsystem ist für eine besonders hohe Rekombinatorleistung bei besonders geringen Komponentenabmessungen sowie für eine hohe Resistenz gegenüber Verunreinigung ausgelegt. Für den Einsatz einer Vorrichtung zur Rekombination von Wasserstoff in einem Gasgemisch in einem Kernkraftwerk ist darüber hinaus aber auch sicherzustellen, daß keine die Sicherheit des Kernkraftwerks negativ beeinflussenden Effekte auftreten können. Es ist zu berücksichtigen, daß eine zur Rekombination des Wasserstoffs eingesetzte Katalysatoran-Ordnung sich in Folge der Rekombination üblicherweise erwärmt und aufgrund ihrer erhöhten Temperatur zur Zündung des Gasgemischs innerhalb der Containment-Atmosphäre des Kernkraftwerks in ungewollter Weise beitragen könnte.

Der Erfindung liegt daher die Aufgabe zugrunde, eine Vorrichtung zur Rekombination von Wasserstoff in einem Gasgemisch, insbesondere für die Containment-Atmosphäre eines Kernkraftwerks, anzugeben, bei deren Betrieb eine ungewollte Zündung des Gasgemischs besonders sicher vermieden ist.

Diese Aufgabe wird für eine Vorrichtung der obengenannten Art erfindungsgemäß gelöst, indem einer zugehörigen Katalysatoranordnung, die in einem im Betriebsfall für das Gasgemisch in freier Konvektion durchströmbaren Gehäuse angeordnet ist, eine Flammenrückhalteeinrichtung zugeordnet ist, die eine Anzahl von zur Einströmung des Gasgemisches vorgesehenen Einströmöffnungen mit einer mittleren Größe von mehr 0,2 mm und höchstens 3 mm, aufweist.

Unter "freier Konvektion" ist hierbei insbesondere zur verstehen, daß eine aus der Rekombination des Wasserstoffs in der Umgebung der Katalysatoranordnung resultierende lokale Temperaturerhöhung des Gasgemisches in einem Auftrieb resultiert, der den Druckverlust in der Rekombinationsvorrichtung derart überkompensiert, daß die Strömung des Gasgemisches durch die Rekombinationsvorrichtung ohne äußere Antriebsmittel gewährleistet ist. Das Gehäuse ist dabei in der Art eines. annähernd senkrecht angeordneten Schachtes ausgebildet, so daß im Betriebsfall eine Kaminwirkung zur Unterstützung der Strömung des Gasgemisches eintritt.

Durch die Dimensionierung der Eintrittsöffnungen ist die Funktionsweise der Flammenrückhalteeinrichtung sichergestellt, wobei Partikel kleinerer Größe, wie beispielsweise Aerosole, frei penetrieren können. Eine Verblockungsgefahr durch Kleinpartikel, wie beispielsweise Aerosole, ist somit sicher vermieden. Der für das Strömungsverhalten des Gasgemisches durch die Rekombinationsvorrichtung relevante Druckverlust bleibt somit auch nach längerem Betrieb besonders gering. Zudem ist bei einer derartigen Dimensionierung in Kombination mit einer geeignet gewählten Anströmfläche die Auslegung der Rekombinationsvorrichtung für eine besonders günstige Strömungsgeschwindigkeit des .einströmenden Gasgemisches im Hinblick auf die Rekombinationsrate des Wasserstoffs möglich.

Die Erfindung geht von der Erkenntnis aus, daß eine ungewollte Zündung des Gasgemisches in der Umgebung der Rekombinationsvorrichtung durch eine aus diese austretende, bei der-Rekombination erzeugte Flamme ausgelöst werden könnte. Um dies sicher zu vermeiden, sollte der vom Gehäuse umschlossene Innenraum der Rekombinationsvorrichtung von ihrem Außenraum explosionstechnisch entkoppelt sein. Dazu ist eine Flammenrückhalteeinrichtung vorgesehen. Die Flammenrückhalteeinrichtung sollte dabei derart angeordnet sein, daß insbesondere eine Flammenausbreitung entgegen der Strömungsrichtung des Gasgemisches sicher unterbunden ist.

Die Flammenrückhalteeinrichtung kann als das Gehäuse ganz oder teilweise umgebendes Lochblech oder Gitter ausgebildet sein. Vorzugsweise ist die Flammenrückhalteeinrichtung der Katalysatoranordnung vorgeschaltet.

Um eine ungewollte Zündung des die Rekombinationsvorrichtung umgebenden Gasgemisches besonders zuverlässig zu vermeiden, ist der Katalysatoranordnung vorteilhafterweise ein Sedimentfänger vorgeschaltet.

Wie sich nämlich in überraschender Weise herausstellte, können auch sogenannte "vagabundierende" heiße Katalysatorpartikel zu einer Zündung des die Rekombinatorvorrichtung umgebenden Gasgemisches beitragen. Beim Betrieb oder auch im Stillstand einer Rekombinationsvorrichtung kann es zur Ablösung von Partikeln aus der Katalysatoranordnung kommen. Diese abgelösten Katalysatorpartikel können aufgrund der bei der Rekombination des Wasserstoffs freigesetzten Wärme eine hohe Temperatur aufweisen und somit bei ihrem Eintritt in ein zündfähiges Gasgemisch, beispielsweise in der Umgebung der Rekombinationsvorrichtung, eine Zündung verursachen. Um eine derartige Zündung durch aus der Rekombinationsvorrichtung ausgetragene vagabundierende Katalysatorpartikel sicher zu vermeiden, ist der Sedimentfänger vorgesehen. Der Sedimentfänger ist dabei zweckmäßigerweise in die Flammenrückhalteeinrichtung integriert.

Für eine besonders zuverlässige Vermeidung einer Zündung des die Rekombinationsvorrichtung umgebenden Gasgemisches durch vagabundierende heiße Katalysatorpartikel ist der Sedimentfänger vorteilhafterweise durch das in das Gehäuse einströmende Gasgemisch kühlbar. Somit ist eine sofortige zuverlässige Abkühlung eines auf den Sedimentfänger auftreffenden glühenden Katalysatorpartikels auf besonders einfache Weise sichergestellt.

zweckmäßigerweise weist das Gehäuse der Rekombinationsvorrichtung oberhalb einer Ausströmöffnung für das Gasgemisch ein Gehäusedach auf. Ein für die Durchströmung des Gasgemisches in freier Konvektion besonders geeignetes, schachtartig ausgebildetes Gehäuse ist somit auch in Kombination mit einem oberhalb angeordneten Spraysystem einsetzbar, ohne daß eine Direktbeaufschlagung der Katalysatoranordnung mit Tropfen eintreten könnte. Eine aus der Direktbeaufschlagung der Katalysatoranordnung mit Tropfen resultierende Auswaschung von Katalysatorpartikeln ist somit allenfalls in geringem Maße möglich.

Die mittlere Größe der Einströmöffnungen becrägt vorzugsweise höchstens 2 mm.

Um eine Zündung des Gasgemisches außerhalb der Rekombinationsvorrichtung besonders zuverlässig zu unterbinden, ist ein von der Katalysatoranordnung und von der Flammenrückhalteeinrichtung begrenztes Deflagrationsvolumen in der Relation zum Volumen des Rekombinatorschachts oder schachtartigem Gehäuses vorzugsweise kleiner als etwa 20% des Volumens des Rekombinatorschachts. Dabei begrenzt das Deflagrationsvolumen eine Flamme vorteilhafterweise auf eine Flammenlänge von höchstens 0, 3 m, oder ein mittlerer Abstand der Flammenrückhalteeinrichtung zu der Katalysatoranordnung höchstens beträgt 0,3 m.

Zur Vermeidung eines Austrages von Grobpartikeln mit dem aurgrund der Rekombinationsreaktion aufgeheizten Gasgemisch aus der Rekombinationsvorrichtung ist der Katalysatoranordnung vorzugsweise ein Grobpartikelfänger nachgeschaltet. Der Grobpartikelfänger kann dabei derart ausgelegt sein, daß einerseits der Austrag aus der Katalysatoranordnung ausgelöster vagabundierender Katalysatorpartikel aus der Rekombinationsvorrichtung wirksam unterbunden ist, und daß andererseits in Bereich des Grobpartikelfängers eine Mischwirkung im durch-strömenden Gasgemisch zum Zweck einer Temperaturhomogenisierung auftritt. Der Grobpartikelfänger ist dabei derart dimensioniert, daß Partikel kleiner Partikelgröße, wie beispieLsweise Atmosphärenaerosole, frei penetrieren können. Eine Filterung von Atmosphärenaerosolen ist dabei nicht erforderlich, insbesondere weil durch die Thermophorese oder temperaturinduzierte Abstoßung an der Katalysatoranordnung eine Ablagerung der Aerosole weitgehend vermieden ist. Eine Verblockungsgefahr durch die Aerosole ist somit sicher vermieden, so daß ein die freie Konvektion in der Rekombinationsvorrichtung hemmender Druckverlust auch bei längerem Betrieb der Rekombinationsvorrichtung gering bleibt. Der Durchsatz des Gasgemisches durch die Rekombinationsvorrichtung ist somit auch bei längerem Betrieb nicht beeinträchtigt. Der Grobpartikelfänger weist dazu vorteilhafterweise eine Anzahl von Durchtrittsöffnungen mit einer mittleren Spaltbreite von mindestens 0,1 mm, vorzugsweise von mindestens 0,2 mm und von höchstens 1 mm, auf. Der Grobpartikelfänger kann hierbei als einlagiges Siebblech oder auch als mehrlagige Sieb- oder Faseranordnung oder als eine Kombination von beiden ausgebildet sein.

Zur Begrenzung der Oberflächentemperaturen der Rekombinationsvorrichtung auf einen Bereich deutlich unterhalb der Zündtemperatur des die Rekombinationsvorrichtung umgebenden Gasgemisches weist das Gehäuse vorteilhafterweise einen Isoliermantel auf. Dabei kann in der Art einer Doppelmantelausführung ein Luftspalt oder auch ein temperatur- und strahlenbeständiger Isolierstoff vorgesehen sein. Zur Verringerung einer Wärmeübertragung durch Strahlung kann die Innenoberfläche des Gehäuses zudem verspiegelt sein. Die Innenoberfläche kann dabei derart geschliffen sein, daß ein dreidimensionaler Spiegeleffekt entsteht, der insbesondere in einem Temperaturbereich von mehr als 500°C den relevanten Wärmetransport durch Strahlung gering hält.

Zur Kühlung des aus der Rekombinationsvorrichtung austretenden Gasgemisches auf eine Temperatur deutlich unterhalb der Zündtemperatur des die Rekombinationsvorrichtung umgebenden Gasgemisches ist der Katalysatoranordnung zweckmäßigerweise eine Beimischstrecke zur Zumischung von Umgebungsatmosphäre zu dem aus der Katalysatoranordnung austretenden Gasgemisch nachgeschaltet. Die Beimischstrecke ist dabei zweckmäßigerweise strömungsseitig hinter dem Grobpartikelfänger angeordnet. Zur Beimischung ist dabei vorzugsweise im Gehäuse eine Anzahl von Spaltöffnungen zur Zuführung von Umgebungsatmosphäre zum innerhalb des Gehäuses strömenden Gasgemisch vorgesehen.

Für eine besonders zuverlässige Vermeidung einer ungewollten Zündung des die Rekombinationsvorrichtung umgebenden Gasgemisches ist die Rekombinationsvorrichtung zweckmäßigerweise derart ausgelegt, daß das aus der Katalysatoranordnung ausströmende, durch die Rekombination des Wasserstoffs aufgeheizte Gasgemisch eine Temperatur unterhalb der Zündtemperacur des die Rekombinationsvorrichtung umgebenden Gasgemisches aufweist. Dazu ist der Katalysatoranordnung vorteilhafterweise ein statischer Mischer nachgeschaltet, der eine Homogenisierung oder Vergleichmäßigung der Temperatur des aus der Katalysatoranordnung ausströmenden Gasgemisches bewirkt. Lokal besonders stark aufgeheizte Teile des Gasgemisches werden dabei mit lokal besonders schwach aufgeheizten Teilen des Gasgemisches vermischt, so daß hohe Maximaltemperaturen vermieden sind.

Für eine besonders effektive Rekombination des im Gasgemisch geführten Wasserstoffs weist die Katalysatoranordnung zweckmäßigerweise Platin und/oder Palladium als katalytisch aktives Material auf. Zweckmäßigerweise umfaßt die Katalysatoranordnung eine Anzahl annähernd plattenförmiger Katalysatorkörper, wobei jeweils zwei benachbarte Katalysatorkörper in einem mittleren Abstand zueinander von mindestens 0,8 cm und von höchstens 3 cm angeordnet sind. Für eine hohe Rekombinationsrate bei geringem Volumen ist dabei vorteilhafterweise jeder Katalysatorkörper beidseitig mit Katalysatormaterial unter Bildung von Reaktionsflächen beschichtet, wobei das Gasgemisch sowohl über die frontseitige als auch über die rückseitige Rekationsfläche jedes Katalysatorkörpers leitbar ist.

Die Katalysatorkörper sind zweckmäßigerweise in einer gemeinsamen Halterung gehaltert. Die Rekombinationsvorrichtung ist somit mit besonders geringem Montage- und Installationsaufwand herstellbar. Die Halterung weist dabei vorteilhafterweise eine gute Wärmeleitfähigkeit auf, so daß in besonders einfacher Weise eine Vergleichmäßigung der Temperatur im Bereich der Katalysatoranordnung gewährleistet ist.

Um die Temperatur des aus der Katalysatoranordnung ausströmenden Gasgemisches besonders zuverlässig unterhalb der Zündtemperatur des die Rekombinationsvorrichtung umgebenden Gasgemisches zu halten, ist die Katalysatoranordnung vorteilhafterweise für eine Oxidation lediglich eines Anteils des im Gasgemisch geführten Wasserstoffs, vorzugsweise für eine Oxidation eines Anteils des im Gasgemisch geführten Wasserstoffs von weniger als 70%, vorzugsweise weniger als 50%, ausgelegt.

Eine besonders zuverlässige Konvektionsströmung innerhalb der Rekombinationsvorrichtung ist erreichbar, indem das Gehäuse in Strömungsrichtung des Gasgemisches vorteilhafterweise eine Länge von mindestens 0,4 m, vorzugsweise von mindestens 1 m und von höchstens 2 m, aufweist.

Die mit der Erfindung erzielten Vorteile bestehen insbesondere darin, daß durch die der Katalysatoranordnung vorgeschaltete Flammenrückhalteeinrichtung die Ausbreitung einer in Folge der bei der Rekombination von Wasserstoff freigesetzten Wärme auftretenden Flamme in einen Raumbereich außerhalb der Rekombinationsvorrichtung sicher vermieden ist. Durch eine geeignete Dimensionierung der Flammenrückhalteeinrichtung ist dabei die Auslegung der Rekombinationsvorrichtung für einen besonders geringen Druckverlust möglich, so daß die Rekombinationsvorrichtung in freier Konvektion und somit mit einfachen Mitteln betreibbar ist. Durch den der Katalysatoranordnung zweckmäßigerweise vorgeschalteten, vorteilhafterweise in die Flammenrückhalteeinrichtung integrierten Sedimentfänger ist zudem ein Austrag sich ablösender vagabundierender heißer Katalysatorpartikel in den Raumbereich außerhalb der Rekombinationsvorrichtung sicher vermieden. Ein flammenloser Betrieb der Rekombinationsvorrichtung in zündfähiger Atmosphäre ist somit unter Vermeidung ungewollter Zündungen im Raumbereich außerhalb der Rekombinationsvorrichtung möglich.

Ausführungsbeispiele der Erfindung werden anhand einer Zeichnung näher erläutert. Darin zeigen:
- Figur 1: eine Vorrichtung zur Rekombination von Wasserstoff in einem Gasgemisch,
- Figur 2: eine alternative Vorrichtung zur Rekombination von Wasserstoff in einem Gasgemisch,
- Figur 3: einen Ausschnitt III aus Figur 2, und
- Figur 4: einen Ausschnitt IV aus Figur 2.

Gleiche Teile sind in allen Figuren mit den gleichen Bezugszeichen versehen.

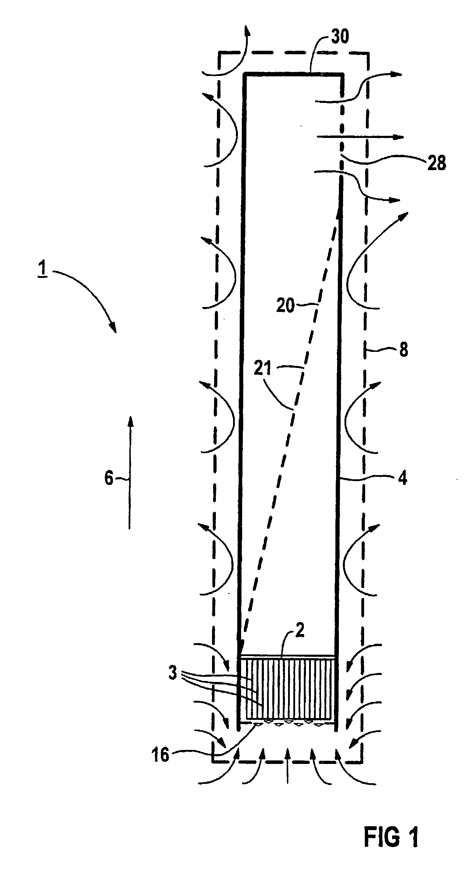

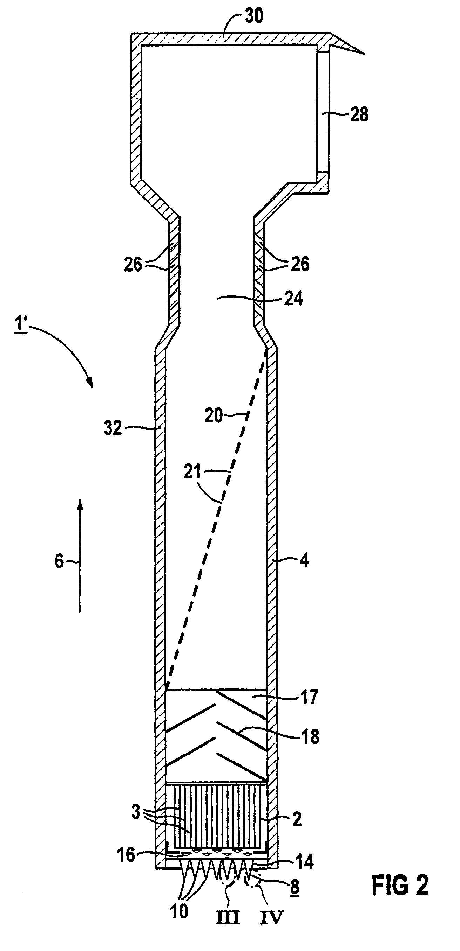

Die Vorrichtung 1 gemäß Figur 1 und die Vorrichtung 1' gemäß Figur 2 sind jeweils zur Rekombination von Wasserstoff in einem Gasgemisch, nämlich in der Containment-Atmosphäre eines nicht näher dargestellten Kernkraftwerks bei einem Störfall, vorgesehen. Die Vorrichtung 1, 1' umfaßt dazu jeweils eine Katalysatoranordnung 2, bei der in nicht näher dargestellter Weise für die Rekombination von Wasserstoff geeignetes katalytisch aktives Material auf einer Trägeranordnung angebracht ist. Als katalytisch aktives Material kann dabei insbesondere eine Mischung aus Edelmetallen oder auch eine Anordnung von Edelmetallfolien vorgesehen sein. Als Edelmetall sind dabei insbesondere Platin und/oder Palladium vorgesehen.

Die Katalysatoranordnung 2 umfaßt eine Anzahl annähernd plattenförmiger, annähernd parallel angeordneter Katalysatorkörper 3, die einem Abstand von mindestens 0,8 cm und höchstens 3 cm zueinander angeordnet sind. Die Katalysatorkörper 3 können dabei als massive Platten oder auch als Schüttung in einem plattenförmigen Tragewerk ausgeführt sein.

Jeder Katalysatorkörper 3 ist beidseitig mit Katalysatormaterial unter Bildung von Reaktionsflächen beschichtet, wobei das Gasgemisch sowohl über die frontseitige als auch über die rückseitige Reaktionsfläche jedes Katalysatorkörpers 3 leitbar ist. Für eine besonders einfache Montage sind die Katalysatorkörper 3 in einer als Einschub aufgebildeten gemeinsamen Halterung mit hohem Wärmeleitungsvermögen gehaltert.

Die Katalysatoranordnung 2 ist in einem Gehäuse 4 angeordnet. Das Gehäuse 4 ist dabei derart ausgebildet, daß die Vorrichtung 1, 1' im Betriebsfall für das Gasgemisch in freier Konvektion durchströmbar ist. Dazu bildet das Gehäuse 4 entlang einer im wesentlichen vertikalen, durch den Pfeil 6 angedeuteten Vorzugsrichtung einen Schacht. Der in Folge der Wärmeentwicklung bei der Rekombination des Gasgemisches im Bereich der Katalysatoranordnung 2 verursachte Auftrieb bewirkt im Betriebsfall der Vorrichtung 1, 1' eine Überkompensation des Druckabfalls für das Gasgemisch, so daß in Folge einer Kaminwirkung des schachtartig ausgestalten Gehäuses 4 eine Durchströmung des Gasgemisches durch die Vorrichtung 1, 1' ohne äußere Hilfs- oder Antriebsmittel einsetzt. Der schachtartig ausgebildete Teil des Gehäuses weist dabei eine Kaminhöhe zwischen 0,5 m und 2,5 m zur Kompensation der verursachten Druckverluste auf. Für ein besonders günstiges Konvektionsverhalten weist das Gehäuse 4 zudem zweckmäßigerweise ein Höhen-zu-Tiefen-Verhältnis zwischen 0,3 und 10 auf.

Die Vorrichtung 1, 1' ist derart ausgestaltet, daß auch bei den in Folge der Wärmefreisetzung bei der Rekombination von Wasserstoff im Bereich der Katalysatoranordnung 2 auftretenden hohen Temperaturen eine Zündung zündfähigen Gasgemisches im Bereich außerhalb der Vorrichtung 1, 1' sicher vermieden ist. Dazu ist der Katalysatoranordnung 2 eine Flammenrückhalteeinrichtung 8 zugeordnet. Im Ausführungsbeispiel gemäß Figur 1 ist die Flammenrückhalteeinrichtung 8 als das Gehäuse 4 vollständig umschließendes Drahtgitter ausgebildet. Alternativ kann auch ein Lochblech vorgesehen sein.

Im Ausführungsbeispiel gemäß Figur 2 ist die Flammenrückhalteeinrichtung 8 der Katalysatoranordnung 2 vorgeschaltet. Die Flammenrückhalteeinrichtung 8 ist dabei derart strömungsseitig vor der Katalysatoranordnung 2 angeordnet, daß ihr mittlerer Abstand zur Katalysatoranordnung 2 weniger als 0,3 m beträgt. Das von der Katalysatoranordnung 2 und der Flammenrückhalteeinrichtung 8 begrenzte Volumen begrenzt eine dort entstehende Flamme somit auf eine Flammenlänge von weniger als 0,3 m.

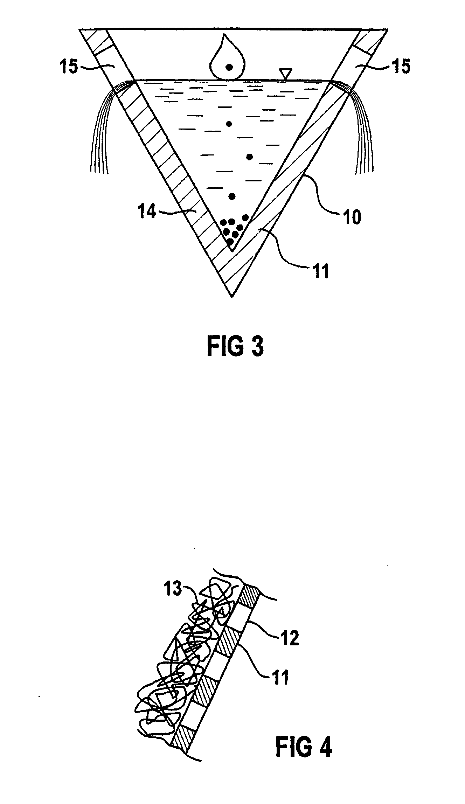

Die Flammenrückhalteeinrichtung 8 umfaßt im Ausführungsbeispiel gemäß Figur 2 eine Anzahl von Flammenfiltern 10, von denen in Figur 3 einer gezeigt ist. Jeder Flammenfilter 10 ist im Ausführungsbeispiel aus einem perforierten metallischen Grundkörper 11 aufgebaut, wobei die Perforierung - wie in Figur 4 im Ausschnitt dargestellt - eine Anzahl von Einströmöffnungen 12 für das Gasgemisch freigibt. Der Grundkörper 11 ist dabei von einer Schicht 13 aus Fasergewebe, insbesondere aus Metallfasergewebe, bedeckt. Ein derartig ausgebildeter Flammenfilter 10 trägt zusätzlich auch zu einer Homogenisierung des ihn durchströmenden Gasgemisches bei.

Die Perforierung des metallischen Grundkörpers 11 jedes Flammenfilters 10 kann beispielsweise rund, geschlitzt oder quadratförmig ausgeführt sein. Alternativ sind auch andere Ausführungen der Perforierung möglich. Die durch alle Eintrittsöffnungen 12 definierte summierte relative freie Fläche aller Flammenfilter 10 ist mindestens so groß, vorteilhafterweise etwa 1- bis 3-mal so groß, wie der freie Eintrittsquerschnitt der Katalysatoranordnung 2.

Für eine besonders große Oberfläche jedes Flammenfilters 10 ist der jeweilige Grundkörper 11 mit verschiedenen Faltungen und/oder Abkantungen versehen, wobei sich ein annähernd sternförmiger Querschnitt ergibt. Die Spaltbreite der durch die Perforierung der Grundkörper 11 der Flammenfilter 10 gegebenen Eintrittsöffnungen 12 ist weiterhin an die im Auslegungsfall erwartete Wasserstoff-Konzentration angepaßt. Für eine explosionstechnische Entkopplung des Inneren der Vorrichtung 1 von ihrer Umgebung bei einer Wasserstoff-Konzentration von bis zu 10 Vol% ist beispielsweise eine Spaltweite von maximal 2 mm vorgesehen. Bei einer Wasserstoff-Konzentration im Auslegungsfall von mehr als 10 Vol% ist hingegen eine Spaltweite von weniger als 1 mm vorgesehen. Die Spaltweite der Perforierung der metallischen Grundkörper 11 der Flammenfilter 10 ist dabei zudem derart dimensioniert, daß eine Abscheidung von Kolloiden oder Aerosolen an den Flammenfiltern 10 weitgehend vermieden ist. Eine Verstopfung der Vorrichtung 1' bei ihrem Betrieb ist somit sicher vermieden.

Als weiteres Auslegungskriterium bei der Dimensionierung der Spaltweite der in den metallischen Grundkörpern 11 der Flammenfilter 10 vorgesehenen Eintrittsöffnungen 12 ist berücksichtigt, daß der Druckaufbau innerhalb des Gehäuses 4 der Vorrichtung 1' im Falle einer Zündung des dort vorhandenen Gasgemisches kleiner als etwa 100 hPa bleiben soll, so daß eine Gefährdung der Vorrichtung 1' sicher vermieden ist. Dazu ist die Spaltweite der Eintrittsöffnungen 12 in den metallischen Grundkörpern 11 der Flammenfilter 10 derart bemessen, daß ein ausreichender Entlastungsquerschnitt für den Fall einer derartigen Zündung vorhanden ist.

In die Flammenrückhalteeinrichtung 8 ist im Ausführungsbeispiel gemäß Figur 2 ein Sedimentfänger 14 integriert. Dazu ist jeder Flammenfilter 10 derart ausgebildet, daß Partikel, die - wie in Figur 3 schematisch dargestellt - direkt oder über einen Flüssigkeitstropfen in den im Längsschnitt V-förmig ausgebildeten Flammenfilter 10 gelangen, sich in dessen Bodenbereich ablagern. Dabei möglicherweise abgeschiedene Flüssigkeit gelangt über Ausströmöffnungen 15 in ein nicht näher dargestelltes Ablaufsystem.

Der Sedimentfänger 14 umfaßt weiterhin eine Anzahl von Fängerblechen 16, von denen jeweils eines über dem Einströmkanal jedes Flammenfilters 10 angeordnet ist. Alternativ oder zusätzlich kann der Sedimentfänger 14 auch ein in Strömungsrichtung des Gasgemisches gesehen vor der Katalysatoranordnung 2 angeordnetes Drahtgeflecht umfassen. Bei der Dimensionierung des Sedimentfängers 14 hinsichtlich der Größe der aufzufangenden Partikel ist die Erkenntnis berücksichtigt, daß aus physikalischen Gründen vornehmlich Katalysatorpartikel mit einer Korngröße von mehr als etwa 100 µm zu einer Zündung des Gasgemisches beitragen. Ein Austritt sich aus der Katalysatoranordnung 2 ablösender vagabundierender heißer Katalysatorpartikel von mehr als dieser Korngröße aus dem Gehäuse 4 entgegen der Strömungsrichtung des Gasgemisches ist durch den Sedimentfänger 14 sicher vermieden. Der Sedimentfänger 14 sowie die Flammenrückhalteeinrichtung 8 sind durch das in das Gehäuse 4 einströmende Gasgemisch kühlbar.

Die Katalysatoranordnung 2 ist derart dimensioniert, daß im Auslegungsfall lediglich ein Anteil des Wasserstoffs der im in die Vorrichtung 1, 1' einströmenden Gasgemisch geführt wird, von weniger als 50% oxidiert wird. Die Temperaturerhöhung im Gasgemisch, die aus der durch die Oxidation freigesetzten Wärmemenge resultiert, ist somit nur begrenzt. Die Temperatur des aus der Katalysatoranordnung 2 austretenden Gasgemisches ist somit deutlich unterhalb der Zündtemperatur der Atmosphäre in der Umgebung der Vorrichtung 1, 1' gehalten.

Für eine weitere Begrenzung der im Gasgemisch auftretenden Maximalcemperatur ist - wie in Figur 2 dargestellt - im Gehäuse 4 in Strömungsrichtung des Gasgemisches nach der Katalysatoranordnung 2 ein statischer Mischer 17 angeordnet. Der statische Mischer 17, der beispielsweise eine Anzahl von Mischplatten 18 umfaßt, dient dabei zur Durchmischung oder Verwirbelung des durchströmenden Gasgemisches. Durch eine derartige Durchmischung oder Verwirbelung wird eine Homogenisierung der Temperatur des Gasgemisches über den Querschnitt innerhalb des Gehäuses 4 erreicht. Aufgrund ihrer räumlichen Nähe zu den Katalysatorkörpern stärker aufgeheizte Zonen innerhalb des Gasgemisches werden dabei mit aufgrund ihrer vergleichsweise größeren räumlichen Entfernung zu den Katalysatorkörpern 3 vergleichsweise kälteren Zonen des Gasgemisches durchmischt. Dadurch wird eine effektive Temperaturherabsetzung der am stärksten aufgeheizten Bereiche innerhalb des Gasgemisches erreicht, so daß vorgebbare Temperaturgrenzwerte für das Gasgemisch sicher unterschritten sind.

Innerhalb des Gehäuses 4 ist der Katalysatoranordnung 2 ein Grobpartikelfänger 20 nachgeschaltet. Der Grobpartikelfänger 20, der im Ausführungsbeispiel gemäß Figur 2 dem statischen Mischer 17 nachgeschaltet ist, ist dabei im Ausführungsbeispiel aus einem Geflecht dünner Drähte aufgebaut. Das Geflecht bildet Durchtrittsöffnungen 21, wobei die Maschenweite des Drahtgewebes unter Berücksichtigung des Druckverlustes der Vorrichtung 1, 1' und der erforderlichen Abscheideleistung kleiner als 800 µm gewählt ist. Als weiteres Auslegungskriterium bei der Dimensionierung der Maschenweite ist zudem berücksichtigt, daß am Grobpartikelfänger 20 keine Abscheidung von Kolloiden oder Aerosolen erfolgen soll. Der Grobpartikelfänger 20 ist vielmehr derart dimensioniert, daß Aerosole oder Kolloide quantitativ und ohne nennenswerte Abscheideverluste penetrieren können. Eine Verblockungsgefahr aufgrund sich ablagernder Aerosole oder Kolloide ist somit sicher vermieden. Der Durchsatz durch die Vorrichtung 1, 1' ist somit auch bei längerem Betrieb nicht nennenswert beeinflußt. Die Maschenweite des Grobpartikelfängers 20 beträgt dabei mehr als 0,1 mm, insbesondere 0,2 mm bis 0,8 mm. Alternativ kann der Grobpartikelfänger 20 auch eine Hintereinanderschaltung mehrerer grobmaschiger Drahtgeflechte umfassen. In diesem Fall kann die Maschenweite jedes Drahtgeflechts auch größer als 1 mm gewählt sein.

Dem Grobpartikelfänger 20 und somit auch der Katalysatoranordnung 2 ist eine Beimischstrecke 24 zur Zumischung von Umgebungsatmosphäre zu dem aus der Katalysatoranordnung 2 austretenden Gasgemisch nachgeschaltet. Im Bereich der Beimischstrecke 24 weist das Gehäuse 4 dazu eine Anzahl von Spaltöffnungen 26 auf. Durch Zumischung von Umgebungsatmosphäre zu dem aus der Katalysatoranordnung 2 austretenden Gasgemisch kann dessen Temperatur zuverlässig auf einen Wert unterhalb der Zündtemperatur der Umgebungsatmosphäre abgesenkt werden.

Im Endbereich des Gehäuses 4 der Vorrichtung 1, 1' ist eine Ausströmöffnung 28 für das Gasgemisch vorgesehen. Die Ausströmöffnung 28 ist dabei seitlich im Gehäuse 4 angeordnet, so daß bei annähernd vertikaler Anordnung der Vorrichtung 1, 1' eine Ausströmung des Gasgemisches in annähernd horizontaler Richtung erfolgt. Oberhalb der Ausströmöffnung 28 ist das Gehäuse 4 mit einem Gehäusedach 30 versehen. Das Gehäusedach 30 dient dabei als tropfenabweisende Begrenzung für die Vorrichtung 1, 1', so daß auch beim Betrieb eines Spraysystems oberhalb der Vorrichtung 1, 1' ein Direkteintrag von Flüssigkeitstropfen in die Vorrichtung 1, 1' vermieden ist. Eine Auswaschung von Katalysatorpartikeln aus der Katalysatoranordnung 2 ist somit auch beim Einsatz eines derartigen Spraysystems sicher vermieden.

Das Gehäuse 4 weist im Ausführungsbeispiel gemäß Figur 2 einen Isoliermantel 32 auf, Im Ausführungsbeispiel ist der Isoliermantel 32 in der Art einer Doppelmantelausführung als Luftspalt ausgebildet. Alternativ kann auch ein zwischen zwei Mantelschichten angeordneter temperatur- und strahlenbeständiger Isolierstoff vorgesehen sein. Zur Verringerung einer Wärmeübertragung durch Strahlung vom Innenbereich des Gehäuses 4 auf dessen Außenbereich ist die Oberfläche der Innenseite des Isoliermantels 32 derart geschliffen, daß ein Spiegeleffekt entsteht. Ein Austritt von Strahlung durch den Isoliermantel 32 ist somit sicher vermieden. Durch diese Ausgestaltung des Isoliermantels 32 ist insbesondere der in einem Temperaturbereich von mehr als 500°C relevante Wärmetransport durch Strahlung in einem hohen Maße unterbunden. Die mit einem derartigen Isoliermantel 32 versehene Vorrichtung 1' weist beim Betrieb im Auslegungsfall eine Außentemperatur ihres Gehäuses von deutlich weniger als 500°C auf. Eine Zündung des das Gehäuse 4 umgebenden Gasgemisches aufgrund einer hohen Gehäuseaußentemperatur ist somit sicher vermieden.

## Patentansprüche

1. Vorrichtung (1, 1') zur Rekombination von Wasserstoff in einem Gasgemisch, mit einer Katalysatoranordnung (2), die in einem im Betriebsfall für das Gasgemisch in freier Konvektion durchströmbaren Gehäuse (4) angeordnet ist, **dadurch gekennzeichnet, daß** der katalysatoranordnung eine Flammenrückhalteeinrichtung (8) zugeordnet ist, die eine Anzahl von zur Einströmung des Gasgemisches vorgesehenen Einströmöffnungen (12) mit einer mittleren Größe von mindestens --0,2 mm und von höchstens 3 mm aufweist.

2. Vorrichtung (1, 1') nach Anspruch 1, bei der die Flammenrückhalteeinrichtung (8) der Katalysatoranordnung (2) vorgeschaltet ist.

3. Vorrichtung (1, 1') nach Anspruch 1 oder 2, bei der der Katalysatoranordnung (2) ein Sedimentfänger (14) vorgeschaltet ist.

4. Vorrichtung (1, 1') nach Anspruch 3, bei der der Sedimentfänger (14) in die Flammenrückhalteeinrichtung (8) integriert ist.

5. Vorrichtung (1, 1') nach Anspruch 3 oder 4, deren Sedimentfänger (14) durch das in das Gehäuse (4) einströmende Gasgemisch kühlbar ist.

6. Vorrichtung (1, 1') nach einem der Ansprüche 1 bis 5, deren Gehäuse (4) ein oberhalb einer Ausströmöffnung (28) für das Gasgemisch angeordnetes Gehäusedach (30) aufweist.

7. Vorrichtung (1,1') nach einem der Ansprüche 1 bis 6, bei der die Einströmöffnungen (12) jeweils eine mittlere Größe von höchstens 2 mmm auf weisen.

8. Vorrichtung (1, 1') nach einem der Ansprüche 1 bis 7, bei der ein von der Katalysatoranordnung (2) und von der Flammenrückhalteeinrichtung (8) begrenztes Volumen eine Flamme auf eine Flammenlänge von höchstens 0,3 m begrenzt.

9. Vorrichtung (1, 1') nach einem der Ansprüche 1 bis 8, bei der ein mittlerer Abstand der Flammenrückhalteeinrichtung (8) zu der Katalysatoranordnung (2) höchstens 0,3 m beträgt.

10. Vorrichtung (1, 1') nach einem der Ansprüche 1 bis 9 bei der der Katalysatoranordnung (2) ein Grobpartikelfänger (20) nachgeschaltet ist.

11. Vorrichtung (1, 1') nach Anspruch 10 deren Grobpartikelfänger (20) eine Anzahl von Durchtrittsöffnungen (21) mit einer mittleren Spaltbreite von mindestens 0,1 mm, vorzugsweise von mindestens 0,2 mm und von höchstens 1 mm, aufweist.

12. Vorrichtung (1, 1') nach einem der Ansprüche 1 bis 11, bei der das Gehäuse (4) einen Isoliermantel (32) aufweist.

13. Vorrichtung (1, 1') nach einem der Ansprüche 1 bis 12, bei der der Katalysatoranordnung (2) eine Beimischstrecke (24) zur Zumischung von Umgebungsatmosphäre zu dem aus der Katalysatoranordnung (2) austretenden Gasgemisch nachgeschaltet ist.

14. Vorrichtung (1, 1') nach einem der Ansprüche 1 bis 13, bei der der Katalysatoranordnung (2) ein statischer Mischer (17) nachgeschaltet ist.

15. Vorrichtung (1, 1') nach einem der Ansprüche 1 bis 14, bei der die Katalysatoranordnung (2) als katalytisch aktives Material Platin und/oder Palladium aufweist.

16. Vorrichtung (1, 1') nach einem der Ansprüche 1 bis 15, bei der die Katalysatoranordnung (2) eine Anzahl annähernd plattenförmiger Katalysatorkörper (3) umfaßt, wobei jeweils zwei benachbarte Katalysatorkörper (3) in einem mittleren Abstand zueinander von mindestens 0,8 cm und von höchstens 3 cm angeordnet sind.

17. Vorrichtung (1; 1') nach Anspruch 16, bei der jeder Katalysatorkörper (3) beidseitig mit Katalysatormaterial unter Bildung von Reaktionsflächen beschichtet ist, wobei das Gasgemisch sowohl über die frontseitige als auch über die rückseitige Reaktionsfläche jedes Katalysatorkörpers (3) leitbar ist.

18. Vorrichtung (1, 1') nach Anspruch 16 oder 17, bei der die Katalysatorkörper (3) in einer gemeinsamen Halterung mit gutem Wärmeleitungsvermögen, insbesondere in einem Einschub, gehaltert sind.

19. Vorrichtung (1, 1') nach einem der Ansprüche 1 bis 18, deren Katalysatoranordnung (2) für eine Oxidation lediglich eines Anteils des im Gasgemisch geführten Wasserstoffs, vorzugsweise für eine Oxydation eines Anteils des im Gasgemisch geführten Wasserstoffs von weniger als 50%, ausgelegt ist.

20. Vorrichtung (1 1') nach einem der Ansprüche 1 bis 19, deren Gehäuse in Strömungsrichtung des Gasgemisches eine Länge von mindestens 0,4m, vorzugsweise von mindestens lm und von höchstens 2m, aufweist.

## Claims

1. Device (1, 1') for the recombination of hydrogen in a gas mixture, having a catalyst arrangement (2) that is disposed in a casing (4) that the gas mixture can flow through in free convection during operation, **characterized in that** the catalyst arrangement is provided with a flame retention device (8) that has a number of inlet openings (12) that are provided for the inflow of the gas mixture and have a mean size of at least 0.2 mm and of not more than 3 mm.

2. Device (1, 1') according to Claim 1, in which the flame retention device (8) is connected upstream of the catalyst arrangement (2).

3. Device (1, 1') according to Claim 1 or 2, in which a sediment trap (14) is connected upstream of the catalyst arrangement (2).

4. Device (1, 1') according to Claim 3, in which the sediment trap (14) is incorporated in the flame retention device (8).

5. Device (1, 1') according to Claim 3 or 4, whose sediment trap (14) can be cooled by the gas mixture flowing into the casing (4).

6. Device (1, 1') according to any of Claims 1 to 5, whose housing (4) has a housing roof (30) disposed above a discharge opening (28) for the gas mixture.

7. Device (1, 1') according to any of Claims 1 to 6, in which the inlet openings (12) each have a mean size of not more than 2 mm.

8. Device (1, 1') according to any of Claims 1 to 7, in which a volume limited by the catalyst arrangement (2) and by the flame retention device (8) limits a flame to a flame length of not more than 0.3 m.

9. Device (1, 1') according to any of Claims 1 to 8, in which a mean spacing of the flame retention device (8) from the catalyst arrangement (2) is not more than 0.3 m.

10. Device (1, 1') according to any of Claims 1 to 9, in which a coarse particle trap (20) is connected downstream of the catalyst arrangement (2).

11. Device (1, 1') according to Claim 10, whose coarse particle trap (20) has a number of passage openings (21) having a mean gap width of at least 0.1 mm, preferably of at least 0.2 mm and of not more than 1 mm.

12. Device (1, 1') according to any of Claims 1 to 11, in which the casing (4) has an insulating jacket (32) .

13. Device (1, 1') according to any of Claims 1 to 12, in which an admixing section (24) for adding ambient atmosphere to the gas mixture leaving the catalyst arrangement (2) is connected downstream of the catalyst arrangement (2).

14. Device (1, 1') according to any of Claims 1 to 13, in which a static mixer (17) is connected downstream of the catalyst arrangement (2).

15. Device (1, 1') according to any of Claims 1 to 14, in which the catalyst arrangement (2) has platinum and/or palladium as catalytically active material.

16. Device (1, 1') according to any of Claims 1 to 15, in which the catalyst arrangement (2) comprises a plurality of approximately plate-shaped catalyst bodies (3), wherein every two adjacent catalyst bodies (3) are disposed at a mean distance from one another of at least 0.8 cm and of at most 3 cm.

17. Device (1, 1') according to Claim 16, in which each catalyst body (3) is coated on both sides with catalyst material to form reaction surfaces, wherein the gas mixture can be conveyed both over the front side and also over the rear side of the reaction surface of each catalyst body (3).

18. Device (1, 1') according to Claim 16 or 17 in which the catalyst bodies (3) are mounted in a common mounting with good thermal conductivity, in particular in an insert.

19. Device (1, 1') according to any of Claims 1 to 18, whose catalyst arrangement (2) is designed for oxidizing only a portion of the hydrogen conveyed in the gas mixture, preferably for oxidizing a portion of the hydrogen conveyed in the gas mixture of less than 50%.

20. Device (1, 1') according to any of Claims 1 to 19, whose casing has a length in the flow direction of the gas mixture of at least 0.4 m, preferably of at least 1 m and of not more than 2 m.

## Revendications

1. Dispositif (1, 1') de recombinaison de l'hydrogène d'un mélange gazeux, comprenant un dispositif (2) à pot catalytique qui est disposé dans une enveloppe (4) dans laquelle le mélange gazeux peut, en cas de fonctionnement, passer en convexion libre, **caractérisé en ce qu'**il est associé au dispositif à pot catalytique un dispositif (8) de retenue des flammes qui a un certain nombre d'orifices (12) d'entrée qui sont prévus pour l'entrée du mélange gazeux et qui ont une dimension moyenne d'au moins 0,2 mm et d'au plus 3 mm.

2. Dispositif (1, 1') suivant la revendication 1, dans lequel le dispositif (8) de retenue des flammes est monté en amont du dispositif (2) à pot catalytique.

3. Dispositif (1, 1') suivant la revendication 1 ou 2, dans lequel un capteur (14) de sédiment est monté en amont du dispositif (2) à pot catalytique.

4. Dispositif (1, 1') suivant la revendication 3, dans lequel le capteur (14) de sédiment est intégré au dispositif (8) de retenue des flammes.

5. Dispositif (1, 1') suivant la revendication 3 ou 4, dont le capteur (14) de sédiment peut être refroidi par le mélange gazeux entrant dans l'enveloppe (4).

6. Dispositif (1, 1') suivant l'une des revendications 1 à 5, dont l'enveloppe (4) a un toit (30) d'enveloppe disposé au-dessus d'une ouverture (28) de sortie pour le mélange gazeux.

7. Dispositif (1, 1') suivant l'une des revendications 1 à 6, dans lequel les orifices (12) d'entrée ont respectivement une dimension moyenne de 2 mm au plus.

8. Dispositif (1, 1') suivant l'une des revendications 1 à 7, dans lequel un volume délimité par le dispositif (2) à pot catalytique et par le dispositif (8) de retenue des flammes limite une flamme à une longueur de flamme de 0,3 m au plus.

9. Dispositif (1, 1') suivant l'une des revendications 1 à 8, dans lequel une distance moyenne du dispositif (8) de retenue des flammes au dispositif (2) à pot catalytique est au plus de 0,3 m.

10. Dispositif (1, 1') suivant l'une des revendications 1 à 9, dans lequel un capteur (20) de particules grossières est monté en aval du dispositif (2) à pot catalytique.

11. Dispositif (1, 1') suivant la revendication 10, dont le capteur (20) de particules grossières a un certain nombre d'ouvertures (21) de passage ayant une largeur moyenne de fente d'au moins 0,1 mm, de préférence d'au moins 0,2 mm, et d'au plus 1 mm.

12. Dispositif (1, 1') suivant l'une des revendications 1 à 11, dans lequel l'enveloppe (4) a une surface latérale (32) isolante.

13. Dispositif (1, 1') suivant l'une des revendications 1 à 12, dans lequel il est monté en aval du dispositif (2) à pot catalytique une zone (24) de mélange destinée au mélange de l'atmosphère ambiante au mélange gazeux sortant du dispositif (2) à pot catalytique.

14. Dispositif (1, 1') suivant l'une des revendications 1 à 13, dans lequel il est monté en aval du dispositif (2) à pot catalytique un mélangeur (17) statique.

15. Dispositif (1, 1') suivant l'une des revendications 1 à 14, dans lequel le dispositif (2) à pot catalytique a, comme matière catalytiquement active, du platine et/ou du palladium.

16. Dispositif (1, 1') suivant l'une des revendications 1 à 15, dans lequel le dispositif (2) à pot catalytique comprend un certain nombre de corps (3) de pots catalytiques à peu près en forme de plaques, respectivement deux corps (3) voisins de pots catalytiques étant disposés à une distance moyenne l'un de l'autre d'au moins 0,8 cm et d'au plus 3 cm.

17. Dispositif (1, 1') suivant la revendication 16, dans lequel chaque corps (3) de pot catalytique est revêtu des deux côtés de matière de catalyseur avec formation de surface de réaction, le mélange gazeux pouvant passer tant sur les surfaces du côté frontal que sur les surfaces de réaction du côté arrière de chaque corps (3) de pot catalytique.

18. Dispositif (1, 1') suivant la revendication 16 ou 17, dans lequel les corps (3) de pots catalytiques sont maintenus dans une pièce commune de fixation ayant un bon pouvoir de conduction de la chaleur, notamment dans un tiroir.

19. Dispositif (1, 1') suivant l'une des revendications 1 à 18, dont le dispositif (2) à pot catalytique est conçu pour une oxydation de seulement une partie de l'hydrogène qui est entraîné dans le mélange gazeux, de préférence pour une oxydation d'une partie de l'hydrogène entraîné dans le mélange gazeux de moins de 50 %.

20. Dispositif (1, 1') suivant l'une des revendications 1 à 19, dont l'enveloppe a, dans la direction du courant du mélange gazeux, une longueur d'au moins 0,4 m, de préférence d'au moins 1 m, et d'au plus 2 m.
